# EUROPEAN PATENT SPECIFICATION

(11) **EP 1 899 247 B1**
(45) Date of publication and mention of the grant of the patent: **07.03.2012**
(21) Application number: 06744327.5
(22) Date of filing: 26.05.2006
(51) Int. Cl.: B65G 47/30, B65G 43/08

(54) **PRODUCT HANDLING, IN PARTICULAR POSITIONING AND GROUPING**
PRODUKTHANDHABUNG, INSBESONDERE POSITIONIERUNG UND GRUPPIERUNG
MANIPULATION DE PRODUITS

(30) Priority: 26.05.2005 GB 0510677
(43) Date of publication of application: 19.03.2008
(73) Proprietor: Quin Systems Limited, Wokingham, Berkshire RG41 2FD (GB)
(72) Inventor: WEBB, Michael, Fleet Hampshire GU51 4LF (GB)
(74) Representative: Stanley, David William
(86) International application number: PCT/GB2006/050125
(87) International publication number: WO 2006/126028

(56) References cited:
- EP-A1- 0 212 023
- EP-A2- 0 104 142
- EP-A2- 0 798 242
- WO-A-01/98185
- WO-A-03/057602
- US-A- 3 245 518
- US-A- 3 759 126
- US-A- 4 155 441
- US-A- 5 088 912

## Description

The present invention relates to product handling, and is concerned particularly although not exclusively with apparatus for and methods of grouping products that are conveyed at random intervals.

Randomly conveyed products can be grouped in many ways. A popular method is to use a twin-belt race track where first and second belts each carry a group of product pockets equal in number to a size of group collation required. Typically, the belts are arranged side by side, with the pockets on the first belt offset laterally in an opposite sense to the pockets on the second belt, such that the pockets on both belts are substantially in line.

Products are conveyed at random intervals to a loading point where an empty pocket of the first belt is waiting. When a product arrives at the loading point, it enters the waiting pocket - typically, it just falls into it - and then the first belt indexes one pocket pitch to bring the next pocket on the belt into position at the loading point. The first belt continues to index after each product arrival until the predetermined group of pockets has been filled with products - the number of pockets corresponding to the desired number of products to be collated. The group of filled pockets is then quickly moved a greater distance than the pocket index - to a product group pick-up point.

As this happens, the second group of pockets on the second belt follows on behind the first group on the first belt and the first pocket of the second group is indexed into position ready to receive the next product. This second group then proceeds as the first, collating a second group of products. Once this is complete, this second group is also quickly moved the greater distance to the product group pick-up point. As this happens, the first group of pockets on the first belt comes up full circle behind the disappearing second group of pockets on the second belt and so the cycle repeats.

For simplicity, the above description assumes one group of pockets on each belt. However, it is often the case that each belt carries more than one group of pockets in order to reduce the distance the belt has to travel within the cycle time, dependant on the distance to the group pick-up point.

A disadvantage of known systems is that there is no buffering provided, other than the group being picked up. This means that, if there is a temporary interruption to product supply, the downstream product pick-up has to pause, immediately causing a gap in the product supply to the receiving process.

Another disadvantage is that the maximum product group size has to be pre-defined in the pocket design or changeable components have to be provided.

Also, two belts have to be used for the race track configuration, downstream of the loading point.

Preferred embodiments of the present invention aim to provide systems that may be improved in the foregoing respects.

US 3,759,126 discloses an apparatus according to the preamble of claim 1 and specifically an apparatus for cutting and transferring dough, in which pieces of dough are placed at uniform intervals on one conveyor, from which they are delivered onto trays on another transverse conveyor to form even rows at evenly spaced intervals.

According to one aspect of the present invention, there is provided product handling apparatus for receiving products and conveying the products in a group to a pick-up point, the apparatus comprising:
a first conveyor arranged to convey products sequentially to a delivery point;
a second conveyor arranged to receive products from said first conveyor at said delivery point and to convey said products in a group to said pick-up point;
positioning means arranged to cause relative movement between said first and second conveyors, thereby to adjust the position of said delivery point relative to said second conveyor;
detection means arranged to detect arrival of a product on said second conveyor and to output a corresponding detection signal; and
control means arranged to initiate movement of said second conveyor and/or positioning means in response to said detection signal.

Preferably, said second conveyor has predetermined product stations along said second conveyor.

Preferably, said predetermined product stations are arranged at regular intervals along said second conveyor.

Preferably, said predetermined product stations are arranged along substantially the full length of said second conveyor.

Preferably, said predetermined product stations comprise compartments.

Preferably, said compartments comprise pockets or recesses.

Apparatus as above preferably includes drive means and drive control means for said second conveyor, wherein the drive control means is arranged to control the drive means such that said second conveyor indexes at a predetermined pitch to receive successive products from said delivery point at said predetermined pitch on said second conveyor.

Apparatus as above preferably includes drive means and drive control means for said positioning means, wherein the drive control means is arranged to control said positioning means such that successive products are delivered from said delivery point to said second conveyor at a predetermined pitch.

Preferably, said drive control means for said positioning means is arranged to respond to irregular movement of said second conveyor.

Apparatus as above preferably includes drive means and drive control means for said second conveyor, wherein the drive control means is arranged to control the drive means such that said second conveyor conveys products on said second conveyor to said pick-up point a group at a time.

Preferably, said first conveyor comprises a belt conveyor.

Preferably, said second conveyor comprises a belt conveyor.

Preferably, said first conveyor has a substantially rectilinear path of travel.

Preferably, said second conveyor has a substantially rectilinear path of travel.

In another aspect, the invention provides a method of receiving products and conveying the products in a group to a pick-up point, comprising the steps of:
conveying products on a first conveyor sequentially to a delivery point;
receiving products on a second conveyor from said first conveyor at said delivery point and conveying said products in a group to said pick-up point;
causing relative movement between said first and second conveyors by positioning means, thereby to adjust the position of said delivery point relative to said second conveyor;
detecting a product arriving at said delivery point and outputting a corresponding detection signal; and
controlling movement of said second conveyor and/or positioning means in response to said detection signal.

Such a method is preferably carried out by an apparatus in accordance with any of the preceding aspects of the invention.

Said products may arrive at said delivery point at random intervals.

For a better understanding of the invention, and to show how embodiments of the same may be carried into effect, reference will now be made, by way of example, to the accompanying diagrammatic drawings, in which:

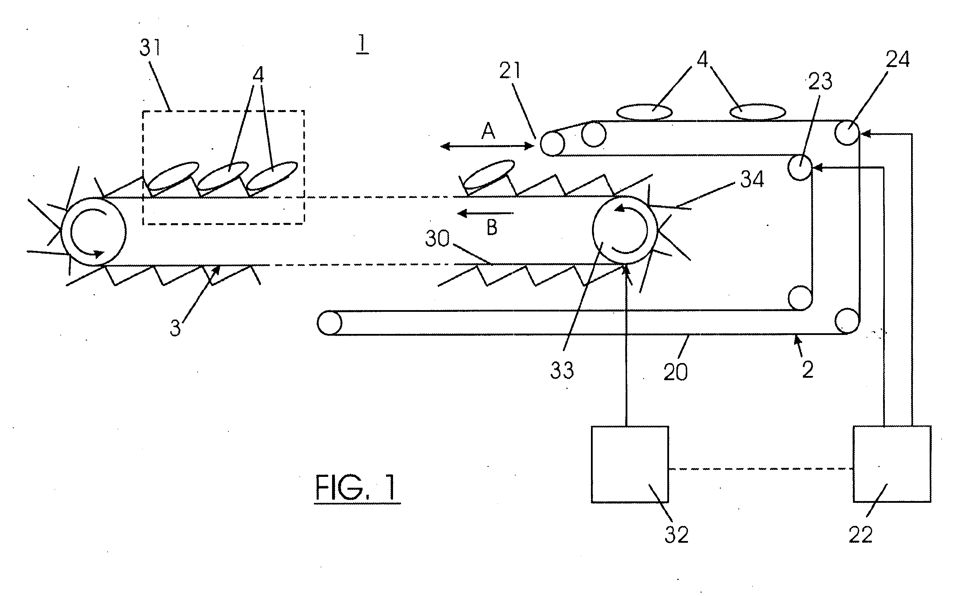

Figure 1 is a schematic view of one example of a product handling apparatus in accordance with an embodiment of the invention.

The product handling apparatus 1 that is shown in Figure1 comprises a first conveyer 2 arranged to convey products 4 to a delivery point 21 and a second conveyer 3 arranged to receive products 4 from the first conveyer 2 at the delivery point 21 and to convey the products 4 in groups to a pick-up point 31.

The first conveyer 2 comprises an endless belt 20 that passes around various guide rollers and is driven by two servo motors 23 and 24 under the control of a first controller 22. The conveyer 2 is of a type known as a "bull-nose" conveyer. By adjusting the drive of the motors 23 and 24, the horizontal (as seen) position of the delivery point 21 can be adjusted relative to the second conveyer 3, as illustrated by arrow A.

The second conveyer 3 also comprises an endless belt 30 and this is driven by a servo motor 33 under the control of a second controller 32 to move in the direction of arrow B. The controllers 22 and 32 may be individual controllers that communicate with one another or they may be implemented as a single controller.

In the illustrated example, the second conveyer 3 comprises a series of pockets 34 that extend for substantially the whole length of the belt 30. In their operative position at the upper side of the belt 3 (as seen), the pockets 34 each provide an angled surface to support respective products 4, which is a space-saving arrangement.

The products 4 arrive on the first conveyer 2 with no definite time or space relationship between successive products. Thus, the products 4 are considered to arrive at random at the delivery point 21.

Initially, the bull-nose conveyer 2 is controlled such that the delivery point 21 is at a predetermined datum position above the second conveyer 3. The second conveyer 3 is controlled such that an empty pocket 34 is located immediately below the delivery point 21. When a product 4 arrives at the delivery point 21, it drops into the empty pocket 34. The second conveyer 3 then indexes a predetermined pitch corresponding to the pitch of the pockets 34, ready to receive the next product 4 in the next empty pocket 34. Means is provided for detecting when a pocket 34 is filled, and the apparatus controlled in response to a corresponding detection signal.

In contrast to known systems, it is not necessary to arrange the pockets 34 in groups on the belt 3 and it is necessary to provide only one belt 3. A continuous stream of products arrive at the pick-up point 31, where the products may be removed in groups. For example, a robot may be arranged to pick off the products 4 in groups of three.

It will appreciated that, because the bull-nose conveyer 2 can move the delivery point 21 both left and right, it can provide a buffering function for irregularities in movement of the second conveyer 3 and/or pauses in arrival of the products 4. If products 4 continue to arrive at the delivery point 21 whilst the second conveyer 3 is stopped for some reason, then the bull-nose conveyer 2 simply moves the delivery point 21 to the right until the second conveyer 3 resumes its motion. If there is too long a pause in the arrival of products 4 at the delivery point 21, the bull-nose conveyer 2 can move the delivery point 21 to the left to "catch up" with the next empty pocket on the second conveyer 3 that may by then have moved to the left.

It will be appreciated that, by providing full control of the movement of the second conveyer 3 and adjustment of the delivery point 21, relative positioning of the delivery point 21 with respect to the second conveyer 3 may be adjusted as desired to accommodate irregularities in flow.

In principle, the first conveyor 2 may be made stationary and the whole conveyor 3 assembly may be moved by positioning means to adjust the relative positions of the delivery point 21 and second conveyor 3 - or both conveyors 2 and 3 may be moveable with respect to one another. However, the illustrated arrangement of moveable delivery point 21 with respect to conveyor 3 may be implemented in a relatively simple manner.

The apparatus as illustrated may be operated in different ways. For example, its default mode of operation may be for the second conveyer 3 to index by a pocket pitch (or, in general, any desired amount) each time a product 4 is received - or at predetermined time intervals - and to pause at the pick-up point 31 whilst a group of products is picked up, the delivery point 21 being adjusted in position as required.

Alternatively, the second conveyer 3 may remain stationary whilst the delivery point 21 is adjusted in position to fill successive pockets 34, and the second conveyer 3 is then indexed a number of pocket pitches, corresponding to the number of products to be picked up in a group, whilst the delivery point 21 follows the movement of the second conveyor 3. The second conveyor 3 then remains stationary again, whilst the delivery point 21 is adjusted in position to fill successive pockets 34, and the cycle repeats.

The bull-nose conveyer 2 will have end-of-travel conditions, and these can be used to start/stop or modulate the speed of upstream and downstream processes to ensure that no excess or depletion of product occurs.

It will be appreciated that an apparatus as illustrated has advantages over known systems, as indicated above. It may also be appreciated that, since pockets 34 are not prearranged on the second conveyer belt 3 in fixed groups, group sizes can easily be changed, even while the apparatus is running. However, the pockets 34 may be arranged in groups if desired.

The controllers 22 and 32 preferably control the motion of the conveyers 2 and 3 to be as smooth and gentle as possible.

Apparatus as illustrated may be well suited to handling products that are non-rigid, for which pockets such as 34 or recesses are useful. However, other compartments or alternative means may be provided for entraining products on the second conveyor 34 - preferably at product stations with predetermined intervals. For suitable products, it is conceivable to have a second conveyor 3 with no predetermined product stations.

Alternatives to the bull-nosed conveyor 2 may be adopted. However, the bull-nosed conveyor with two servo motors may be implemented with relatively low inertia, which may facilitate high-speed operation.

Typically, conveyors such as 2 and 3 will have rectilinear paths of travel, although other paths are possible.

Apparatus as illustrated will typically have various motion and/or position sensors to which controllers such as 22 and 32 may respond. However, as such motion and position detection with servo control is well known to the skilled reader, such details are not shown or described.

Although apparatus as illustrated is well suited to the handling of random products, it may nevertheless be used with products that are supplied in a predetermined manner.

In this specification, the verb "comprise" has its normal dictionary meaning, to denote non-exclusive inclusion. That is, use of the word "comprise" (or any of its derivatives) to include one feature or more, does not exclude the possibility of also including further features.

## Claims

1. Product handling apparatus (1) for receiving products (4) and conveying the products (4) in a group to a pick-up point (31), the apparatus comprising:
a first conveyor (2) arranged to convey products (4) sequentially to a delivery point (21);
a second conveyor (3) arranged to receive products (4) from said first conveyor (2) at said delivery point (21) and to convey said products (4) in a group to said pick-up point (31);
positioning means (23, 24) arranged to cause relative movement between said first and second conveyors (2, 3), thereby to adjust the position of said delivery point (21) relative to said second conveyor (3);
the apparatus being **characterised by**:
detection means arranged to detect arrival of a product (4) on said second conveyor (3) and to output a corresponding detection signal; and
control means (22, 32) arranged to initiate movement of said second conveyor (3) and/or positioning means (23, 24) in response to said detection signal.

2. Apparatus according to claim 1, wherein said second conveyor (3) has predetermined product stations (34) along said second conveyor (3).

3. Apparatus according to claim 2, wherein said predetermined product stations (34) are arranged at regular intervals along said second conveyor (3).

4. Apparatus according to claim 2 or 3, wherein said predetermined product stations (34) are arranged along substantially the full length of said second conveyor (3).

5. Apparatus according to any of claims 2 to 4, wherein said predetermined product stations (34) comprise compartments.

6. Apparatus according to claim 5, wherein said compartments (34) comprise pockets or recesses.

7. Apparatus according to any of the preceding claims, including drive means (33) and drive control means (32) for said second conveyor (3), wherein the drive control means (32) is arranged to control the drive means (33) such that said second conveyor (3) indexes at a predetermined pitch to receive successive products (4) from said delivery point (21) at said predetermined pitch on said second conveyor (3).

8. Apparatus according to any of the preceding claims, including drive means and drive control means (22) for said positioning means (23, 24), wherein the drive control means (22) is arranged to control said positioning means (23, 24) such that successive products (4) are delivered from said delivery point (21) to said second conveyor (3) at a predetermined pitch.

9. Apparatus according to claim 8, wherein said drive control means (22) for said positioning means (23, 24) is arranged to respond to movement of said second conveyor (3).

10. Apparatus according to any of the preceding claims, including drive means (33) and drive control means (32) for said second conveyor (3), wherein the drive control means (32) is arranged to control the drive means (33) such that said second conveyor (3) conveys products (4) on said second conveyor (3) to said pick-up point (31) a group at a time.

11. Apparatus according to any of the preceding claims, wherein said first conveyor (2) comprises a belt conveyor.

12. Apparatus according to any of the preceding claims, wherein said second conveyor (3) comprises a belt conveyor.

13. Apparatus according to any of the preceding claims, wherein said first conveyor (2) has a substantially rectilinear path of travel.

14. Apparatus according to any of the preceding claims, wherein said second conveyor (3) has a substantially rectilinear path of travel.

15. A method of receiving products (4) and conveying the products (4) in a group to a pick-up point (31), comprising the steps of:
conveying products (4) on a first conveyor (2) sequentially to a delivery point (21);
receiving products (4) on a second conveyor (3) from said first conveyor (2) at said delivery point (21) and conveying said products (4) in a group to said pick-up point (31);
causing relative movement between said first and second conveyors (2, 3) by positioning means (23, 24), thereby to adjust the position of said delivery point (21) relative to said second conveyor (3);
the method being **characterised by** :
detecting a product (4) arriving on said second conveyor (3) and outputting a corresponding detection signal; and
initiating movement of said second conveyor (3) and/or positioning means (23, 24) in response to said detection signal.

16. A method according to claim 15, carried out by an apparatus according to any of claims 2 to 14.

17. A method according to claim 15 or 16, wherein said products (4) arrive at said delivery point (21) at random intervals.

## Patentansprüche

1. Produkthandhabungsvorrichtung (1) zum Empfangen von Produkten (4) und Befördern der Produkte (4) in einer Gruppe zu einer Aufnahmestelle (31), wobei die Vorrichtung umfasst:
einen ersten Förderer (2), der so ausgelegt ist, dass er Produkte (4) der Reihe nach zu einer Übergabestelle (21) befördert;
einen zweiten Förderer (3), der so ausgelegt ist, dass er Produkte (4) vom ersten Förderer (2) an der Übergabestelle (21) empfängt und die Produkte (4) in einer Gruppe zur Aufnahmestelle (31) befördert;
Positionierungsmittel (23, 24), die so ausgelegt sind, dass sie eine relative Bewegung zwischen den ersten und zweiten Förderern (2, 3) bewirken, um dadurch die Position der Übergabestelle (21) in Bezug auf den zweiten Förderer (3) anzupassen;
wobei die Vorrichtung **gekennzeichnet ist durch**:
Erkennungsmittel, die so ausgelegt sind, dass sie die Ankunft einer Produkts (4) auf dem zweiten Förderer (3) erkennen und ein entsprechendes Erkennungssignal ausgeben; und
Steuermittel (22, 32), die so ausgelegt sind, dass sie als Reaktion auf das Erkennungssignal eine Bewegung des zweiten Förderers (3) und/oder der Positionierungsmittel (23, 24) einleiten.

2. Vorrichtung nach Anspruch 1, wobei der zweite Förderer (3) vorgegebene Produktstationen (34) entlang des zweiten Förderers (3) aufweist.

3. Vorrichtung nach Anspruch 2, wobei die vorgegebenen Produktstationen (34) in regelmäßigen Intervallen entlang des zweiten Förderers (3) angeordnet sind.

4. Vorrichtung nach Anspruch 2 oder 3, wobei die vorgegebenen Produktstationen (34) im Wesentlichen entlang der gesamten Länge des zweiten Förderers (3) angeordnet sind.

5. Vorrichtung nach einem der Ansprüche 2 bis 4, wobei die vorgegebenen Produktstationen (34) Fächer umfassen.

6. Vorrichtung nach Anspruch 5, wobei die Fächer (34) Taschen oder Vertiefungen umfassen.

7. Vorrichtung nach einem der vorhergehenden Ansprüche, umfassend Antriebsmittel (33) und Antriebssteuermittel (32) für den zweiten Förderer (3), wobei das Antriebssteuermittel (32) so ausgelegt ist, dass es die Antriebsmittel (33) derart steuert, dass der zweite Förderer (3) in einem vorgegebenen Abstand einteilt, um aufeinander folgende Produkte (4) von der Übergabestelle (21) im vorgegebenen Abstand auf dem zweiten Förderer (3) zu empfangen.

8. Vorrichtung nach einem der vorhergehenden Ansprüche, umfassend Antriebsmittel und Antriebssteuermittel (22) für die Positionierungsmittel (23, 24), wobei das Antriebssteuermittel (22) so ausgelegt ist dass es die Positionierungsmittel (23, 24) derart steuert, dass aufeinander folgende Produkte (4) von der Übergabestelle (21) in einem vorgegebenen Abstand an den zweiten Förderer (3) übergeben werden.

9. Vorrichtung nach Anspruch 8, wobei das Antriebssteuermittel (22) für die Positionierungsmittel (23, 24) so ausgelegt ist, dass es auf die Bewegung des zweiten Förderers (3) reagiert.

10. Vorrichtung nach einem der vorhergehenden Ansprüche, umfassend Antriebsmittel (33) und Antriebssteuermittel (32) für den zweiten Förderer (3), wobei das Antriebssteuermittel (32) so ausgelegt ist, dass es die Antriebsmittel (33) derart steuert, dass der zweite Förderer (3) Produkte (4) auf dem zweiten Förderer (3) jeweils gruppenweise zur Aufnahmestelle (31) befördert.

11. Vorrichtung nach einem der vorhergehenden Ansprüche, wobei der erste Förderer (2) einen Bandförderer umfasst.

12. Vorrichtung nach einem der vorhergehenden Ansprüche, wobei der zweite Förderer (3) einen Bandförderer umfasst.

13. Vorrichtung nach einem der vorhergehenden Ansprüche, wobei der erste Förderer (2) einen im Wesentlichen geradlinigen Laufweg aufweist.

14. Vorrichtung nach einem der vorhergehenden Ansprüche, wobei der zweite Förderer (3) einen im Wesentlichen geradlinigen Laufweg aufweist.

15. Verfahren zum Empfangen von Produkten (4) und Befördern der Produkte (4) in einer Gruppe zu einer Aufnahmestelle (31), umfassend die folgenden Schritte:
Befördern von Produkten (4) auf einem ersten Förderer (2) der Reihe nach zu einer Übergabestelle (21);
Empfangen von Produkten (4) auf einem zweiten Förderer (3) vom ersten Förderer (2) an der Übergabestelle (21) empfängt und Befördern der Produkte (4) in einer Gruppe zur Aufnahmestelle (31);
Bewirken einer relativen Bewegung zwischen den ersten und zweiten Förderern (2, 3) durch Positionierungsmittel (23, 24), um dadurch die Position der Übergabestelle (21) in Bezug auf den zweiten Förderer (3) anzupassen;
wobei das Verfahren **gekennzeichnet ist durch**:
Erkennen eines Produkts (4), das auf dem zweiten Förderer (3) ankommt, und Ausgeben eines entsprechenden Erkennungssignals; und
Einleiten als Reaktion auf das Erkennungssignal einer Bewegung des zweiten Förderers (3) und/oder der Positionierungsmittel (23, 24).

16. Verfahren nach Anspruch 15, das durch eine Vorrichtung nach einem der Ansprüche 2 bis 14 ausgeführt wird.

17. Verfahren nach Anspruch 15 oder 16, wobei die Produkte (4) in willkürlichen Intervallen an der Übergabestelle (21) ankommen.

## Revendications

1. Appareil de manipulation de produits (1) destiné à recevoir des produits (4) et transporter des produits (4) groupés vers un point de ramassage (31), l'appareil comprenant :
un premier convoyeur (2) agencé pour transporter les produits (4) de manière séquentielle vers un point de livraison (21) ;
un second convoyeur (3) agencé pour recevoir les produits (4) dudit premier convoyeur (2) audit point de livraison (21) et pour transporter lesdits produits (4) groupés audit point de ramassage (31) ;
des moyens de positionnement (23, 24) agencés pour provoquer le mouvement relatif entre lesdits premier et second convoyeurs (2, 3), pour ainsi ajuster la position dudit point de livraison (21) par rapport audit second convoyeur (3) :
l'appareil étant **caractérisé par** :
des moyens de détection agencés pour détecter l'arrivée d'un produit (4) sur ledit second convoyeur (3) et pour émettre un signal de détection correspondant ; et
des moyens de commande (22, 32) agencés pour déclencher le mouvement dudit second convoyeur (3) et/ou des moyens de positionnement (23, 24) en réponse audit signal de détection.

2. Appareil selon la revendication 1, dans lequel ledit second convoyeur (3) présente des postes de produit prédéterminés (34) le long dudit second convoyeur (3).

3. Appareil selon la revendication 2, dans lequel lesdits postes de produit prédéterminés (34) sont agencés à intervalles réguliers le long dudit second convoyeur (3).

4. Appareil selon la revendication 2 ou 3, dans lequel lesdits postes de produit prédéterminés (34) sont agencés le long essentiellement de la longueur totale dudit second convoyeur (3).

5. Appareil selon l'une des revendications 2 à 4, dans lequel lesdits postes de produit prédéterminés (34) comprennent des compartiments.

6. Appareil selon la revendication 5, dans lequel lesdits compartiments (34) comprennent des poches ou des évidements.

7. Appareil selon l'une quelconque des revendications précédentes, comprenant un moyen d'entraînement (33) et un moyen de commande d'entraînement (32) pour ledit second convoyeur (3), dans lequel le moyen de commande d'entraînement (32) est agencé pour commander le moyen d'entraînement (33) de telle manière que ledit second convoyeur (3) indexe avec un pas prédéterminé pour recevoir les produits successifs (4) dudit point de livraison (21) audit pas prédéterminé sur ledit second convoyeur (3).

8. Appareil selon l'une quelconque des revendications précédentes, comprenant un moyen d'entraînement et un moyen de commande d'entraînement (22) pour lesdits moyens de positionnement (23, 24), dans lequel le moyen de commande d'entraînement (22) est agencé pour commander lesdits moyens de positionnement (23, 24) de telle manière que des produits successifs (4) soient livrés dudit point de livraison (21) audit second convoyeur (3) à un pas prédéterminé.

9. Appareil selon la revendication 8, dans lequel ledit moyen de commande d'entraînement (22) pour lesdits moyens de positionnement (23, 24) est agencé pour répondre au mouvement dudit second convoyeur (3).

10. Appareil selon l'une quelconque des revendications précédentes, comprenant un moyen d'entraînement (33) et un moyen de commande d'entraînement (32) pour ledit second convoyeur (3), dans lequel le moyen de commande d'entraînement (32) est agencé pour commander le moyen d'entraînement (33) de telle manière que ledit second convoyeur (3) transporte les produits (4) sur ledit second convoyeur (3) vers ledit point de ramassage (31) en un seul groupe à la fois.

11. Appareil selon l'une quelconque des revendications précédentes, dans lequel ledit premier convoyeur (2) comprend un convoyeur à courroie.

12. Appareil selon l'une quelconque des revendications précédentes, dans lequel ledit second convoyeur (3) comprend un convoyeur à courroie.

13. Appareil selon l'une quelconque des revendications précédentes, dans lequel ledit premier convoyeur (2) a une course essentiellement rectiligne.

14. Appareil selon l'une quelconque des revendications précédentes, dans lequel ledit second convoyeur (3) a une course essentiellement rectiligne.

15. Procédé de réception de produits (4) et de transport de produits (4) groupés vers un point de ramassage (31), l'appareil comprenant les étapes de :
transporter les produits (4) sur un premier convoyeur (2) de manière séquentielle vers un point de livraison (21) ;
recevoir les produits (4) dudit premier convoyeur (2) sur un second convoyeur (3) sur ledit point de livraison (21) et transporter lesdits produits (4) groupés audit point de ramassage (31) ;
provoquer le mouvement relatif entre lesdits premier et second convoyeurs (2, 3) par des moyens de positionnement (23, 24), pour ainsi ajuster la position dudit point de livraison (21) par rapport audit second convoyeur (3) ;
le procédé étant **caractérisé par** :
la détection d'un produit (4) arrivant sur ledit second convoyeur (3) et la sortie d'un signal de détection correspondant ; et
le déclenchement du mouvement dudit second convoyeur (3) et/ou des moyens de positionnement (23, 24) en réponse audit signal de détection.

16. Procédé selon la revendication 15, réalisé par un appareil selon l'une quelconque des revendications 2 à 14.

17. Procédé selon la revendication 15 ou 16, dans lequel lesdits produits (4) arrivent audit point de livraison (21) à intervalles aléatoires.
